# EUROPÄISCHE PATENTSCHRIFT

(11) **EP 2 914 472 B1**
(45) Veröffentlichungstag und Bekanntmachung des Hinweises auf die Patenterteilung: **21.12.2016**
(21) Anmeldenummer: 13786450.0
(22) Anmeldetag: 25.10.2013
(51) Int. Cl.: B29K 83/00, B29C 45/16, B29C 45/27, B29L 31/30, B62D 5/04, F16H 57/031, F16H 57/032, F16J 13/08, F16J 15/06, F16J 15/14

(54) **VERFAHREN ZUM HERSTELLEN EINES KUNSTSTOFFGEHÄUSES**
METHOD FOR THE PRODUCTION OF A PLASTIC HOUSING
PROCÉDÉ DE FABRICATION D'UN CARTER EN PLASTIQUE

(30) Priorität: 30.10.2012 DE 102012110373
(43) Veröffentlichungstag der Anmeldung: 09.09.2015
(73) Patentinhaber: Robert Bosch Automotive Steering GmbH, 73527 Schwäbisch Gmünd (DE)
(72) Erfinder: FÜCHSEL, Dennis, 73527 Schwäbisch Gmünd (DE); HAFERMALZ, Jens, 73116 Wäschenbeuren (DE)
(86) Internationale Anmeldenummer: PCT/EP2013/072363
(87) Internationale Veröffentlichungsnummer: WO 2014/067863

(56) Entgegenhaltungen:
- WO-A1-2012/026430
- DE-A1-102009 026 984

## Beschreibung

Die Erfindung betrifft ein Verfahren zum Herstellen eines Kunststoffgehäuses für ein Gehäuse eines Lenkgetriebes und eine Anordnung zur Durchführung des Verfahrens.

Als Lenkung wird eine Vorrichtung bezeichnet, die bspw. bei Kraftfahrzeugen dazu dient, die Fahrtrichtung zu beeinflussen. Dabei wird eine vom Fahrer an einem Lenkrad eingeleitete Lenkbewegung u. a. über ein Lenkgetriebe auf angelenkte Räder übertragen. Diese Lenkgetriebe sind regelmäßig von einem Gehäuse umgeben.

Als Gehäuse für Lenkgetriebe werden zu einem großen Teil Aluminiumdruckgussgehäuse als Lenkgehäuse verwendet, die durch Kunststoffgehäuse ergänzt werden. Die Verbindung zwischen den Aluminiumgehäusen und den Kunststoffgehäusen erfolgt in vielen Fällen mit Schrauben. Dabei werden üblicherweise die Bohrungen im Kunststoffgehäuse durch Metallhülsen verstärkt, um ein Kriechen des Kunststoffes und damit ein Lockern der Schrauben zu verhindern. Zur Abdichtung des Kunststoffgehäuses zum Aluminiumgehäuse wird oftmals ein O-Ring eingesetzt, der eine technisch ausgereifte Abdichtung darstellt. O-Ringe sind ringförmige Dichtungselemente mit einem runden bzw. O-förmigen Querschnitt.

Damit die O-Ring-Abdichtung in dem fahrzeugüblichen Temperaturbereich von -40 °C bis +120 °C sicher funktioniert, muss der verwendete Kunststoff eine ähnliche Wärmedehnung wie das Aluminium haben. Weiterhin muss der Kunststoff die Festigkeitsanforderungen der Lenkung im Fahrzeug erfüllen. Aus diesem Grund sind die Kunststoffe in vielen Ausführungen durch Füllstoffe verstärkt.

Bei allgemeinen Anwendungen werden Kunststoffe oftmals mit anderen Bauteilen über Schnappelemente verbunden. Dabei wird eine Kunststofflasche gedehnt, die dann in einen Hinterschnitt des anderen Bauteils einrastet. Dabei wird die gute Dehnfähigkeit vom Kunststoff genutzt. Wenn bei einem Lenkgetriebe Schnappelemente für die Verbindung angewendet werden sollen, müssen die Kunststofflaschen sehr lang sein, da die Dehnfähigkeit der verstärkten Kunststoffe stark reduziert ist. Für diese langen Kunststofflaschen ist im Fahrzeug jedoch regelmäßig kein Bauraum vorhanden. Weiterhin ist zu beachten, dass die Fixierung der Kunststoffteile, bspw. der Kunststoffgehäuse am Lenkgehäuse, sicher und kostengünstig sein sollte. Dies kann ebenfalls durch Schnappelemente realisiert werden. Diese Schnappelemente müssen sich relativ zum Grundkörper des Kunststoffgehäuses radial in eine Nut des Lenkgehäuses verschieben lassen, um eine sichere Fixierung des Kunststoffgehäuses gewährleisten zu können Die WO 2012/026430 A1 offenbart ein Verfahren zum Herstellen eines Kunststoffgehäuses für ein Gehäuse eines Lenkgetriebes, bei dem in einem ersten Schritt ein Grundkörper und mindestens ein Verschlusselement hergestellt werden, und in einem zweiten Schritt eine Elastomerschicht aufgebracht wird.

Vor diesem Hintergrund wird ein Verfahren mit den Merkmalen des Anspruchs 1 und eine Anordnung gemäß Anspruch 9 vorgestellt. Ausführungen ergeben sich aus den abhängigen Ansprüchen und der Beschreibung.

Das vorgestellte Verfahren dient zum Herstellen eines Kunststoffgehäuses für ein Gehäuse eines Lenkgetriebes, bei dem in einem ersten Schritt ein Grundkörper und mindestens ein Verschlusselement hergestellt werden und in einem zweiten Schritt eine Elastomerschicht über mindestens einen Angusspunkt in einem Angussprozess aufgebracht wird, die den Grundkörper und das mindestens eine Verschlusselement miteinander verbindet.

Elastomere sind formfeste, elastisch verformbare Kunststoffe.

In Ausführung des Verfahrens wird genau ein Angusspunkt im zweiten Schritt verwendet. Als Material für die Elastomerschicht wird bspw. ein thermoplastisches Elastomer oder ein Silikonwerkstoff verwendet.

In dem ersten Schritt kann ein Spritzgussprozess durchgeführt werden.

In dem zweiten Schritt kann ein Schirmanguss oder Stangenanguss durchgeführt werden.

Das auf die vorstehend beschriebene Art hergestellte Kunststoffgehäuse kann mit einem Lenkgehäuse verbunden werden, um das Gehäuse eines Lenkgetriebes zu bilden.

Es wird weiterhin eine Anordnung zum Herstellen eines Kunststoffgehäuses für ein Gehäuse eines Lenkgetriebes zur Durchführung eines Verfahrens der vorstehend beschriebenen Art, vorgestellt, mit einer oberen Werkzeughälfte und einer unteren Werkzeughälfte und einem Angusskanal zum Aufbringen einer Schicht aus einem elastischen Material

Diese Anordnung kann für einen Stangenanguss oder einen Schirmanguss ausgelegt sein.

Es wird weiterhin ein Gehäuse für ein Lenkgetriebe vorgestellt, das ein Lenkgehäuse und ein Kunststoffgehäuse umfasst, wobei das Kunststoffgehäuse einen Grundkörper aus einem Kunststoff, eine Elastomerschicht und mindestens ein Verschlusselement umfasst.

In Ausgestaltung ist die Elastomerschicht aus einem thermoplastischen Elastomer oder einem Silikonwerkstoff gefertigt.

Wenigstens eines der Verschlusselemente kann als Schnappelement ausgebildet sein. Alternativ oder ergänzend kann am Gehäuse wenigstens eines der Verschlusselemente als Verriegelungselement ausgebildet sein.

Das wenigstens eine Verschlusselement kann über eine Sicherung, form- und/oder kraftschlüssig verfügen. Weiterhin kann eine Einrichtung zur Demontage vorgesehen sein.

Darüber hinaus kann die Elastomerschicht über den gesamten Umfang des Grundkörpers vorgesehen sein.

Weiterhin kann wenigstens eines der Verschlusselemente als Drehverriegelungselement ausgebildet sein.

In Ausgestaltung umfasst das Kunststoffgehäuse zusätzlich einen O-Ring.

Es wird weiterhin ein Kunststoffgehäuse für ein Gehäuse für ein Lenkgetriebe, insbesondere für ein Gehäuse der vorstehend beschriebenen Art, vorgestellt, mit einem Grundkörper, mindestens einem Verschlusselement und einer Elastomerschicht.

Der Grundkörper und das Verschlusselement können aus einem faserverstärkten Kunststoff bestehen. Die Schicht aus elastischem Material kann aus Elastomer gefertigt sein.

Mit dem vorgestellten Gehäuse wird eine dichte feste Verbindung mit geringem Bauraum zwischen einem Kunststoffgehäuse und einem Gehäuse, vorzugsweise aus Metall, im speziellen aus Aluminiumdruckguss gewährleistet. Dies kann über eine Schnappfunktion, ggf. mit Sicherung der Schnappelemente, eine Drehverriegelungsfunktion und/oder eine Riegelfunktion erfolgen.

Die erforderliche Bewegungsmöglichkeit wird durch eine elastische Schicht bzw. Komponente, die bspw. aus einem Silikonwerkstoff oder einem thermoplastischen Elastomer gefertigt ist, zwischen dem Grundkörper und den Schnapp- bzw. Riegelelementen erreicht. Weiterhin ist es vorteilhaft, wenn diese elastische Schicht zur Abdichtung zwischen den beiden Gehäusen genutzt werden kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt eine Ausführung des beschriebenen Gehäuses für ein Lenkgetriebe.
- Figur 2: zeigt einen Ausschnitt aus Figur 1.
- Figur 3: zeigt einen weiteren Ausschnitt aus einem Kunststoffgehäuse.
- Figur 4: zeigt das Kunststoffgehäuse aus Figur 3 in einer Drauf- und Schnittansicht.
- Figur 5: zeigt einen Ausschnitt aus einem weiteren Gehäuse für ein Lenkgetriebe.
- Figur 6: zeigt in einer Draufsicht und einer Seitenansicht ein Kunststoffgehäuse.
- Figur 7: zeigt ein Ausschnitt aus dem Kunststoffgehäuse aus Figur 6 in zwei Ansichten.
- Figur 8: zeigt eine weitere Ausführung des beschriebenen Gehäuses für ein Lenkgetriebe.
- Figur 9: zeigt das Kunststoffgehäuse aus Figur 8.
- Figur 10: zeigt eine weitere Ausführung des vorgestellten Gehäuses.
- Figur 11: zeigt einen Ausschnitt aus Figur 10.
- Figur 12: zeigt das Kunststoffgehäuse aus Figur 10 in einer perspektivischen Ansicht.
- Figur 13: zeigt das Kunststoffgehäuse aus Figur 10 in einer Draufsicht.
- Figur 14: zeigt das Kunststoffgehäuse in Schnittansicht.
- Figur 15: zeigt eine weitere Schnittansicht.
- Figur 16: zeigt eine Ausführung des Gehäuses.
- Figur 17: zeigt einen Ausschnitt aus Figur 16.
- Figur 18: zeigt das Kunststoffgehäuse aus Figur 16.
- Figur 19: zeigt das Kunststoffgehäuse.
- Figur 20: zeigt einen Ausschnitt aus Figur 19.
- Figur 21: zeigt das Kunststoffgehäuse.
- Figur 22: zeigt das Kunststoffgehäuse in Draufsicht.
- Figur 23: zeigt ein Kunststoffgehäuse.
- Figur 24: zeigt das Kunststoffgehäuse.
- Figur 25: zeigt das Kunststoffgehäuse.
- Figur 26: zeigt das Kunststoffgehäuse.
- Figur 27: zeigt das Kunststoffgehäuse.
- Figur 28: zeigt eine Ausführung des Kunststoffgehäuses.
- Figur 29: zeigt einen Ausschnitt aus Figur 28.
- Figur 30: zeigt das Kunststoffgehäuse.
- Figur 31: zeigt das Kunststoffgehäuse.
- Figur 32: zeigt Montageschritte.
- Figur 33: zeigt ein Kunststoffgehäuse.
- Figur 34: zeigt eine Anordnung zur Herstellung.

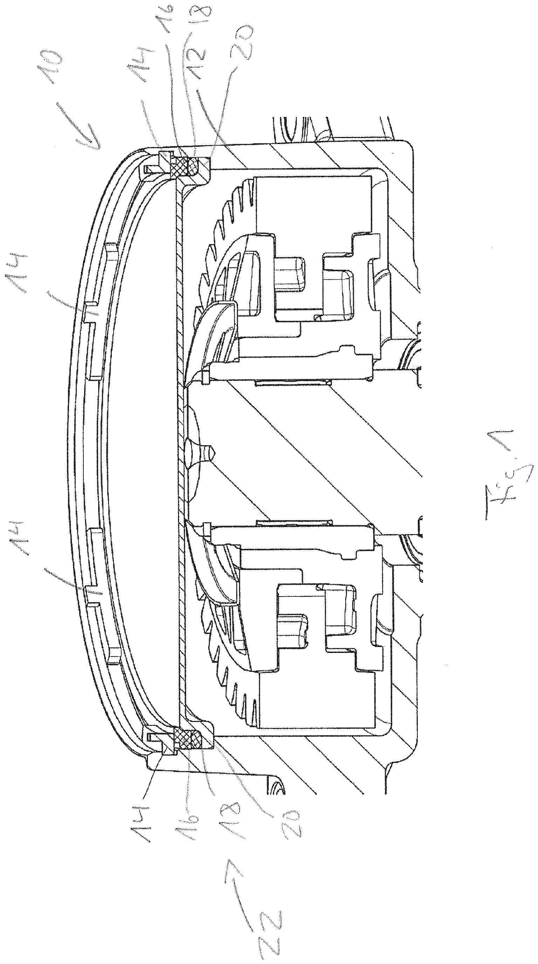

Figur 1 zeigt eine Ausführungsform des beschriebenen Gehäuses 10 für ein Lenkgetriebe. Die Darstellung zeigt ein Lenkgehäuse 12 bspw. aus einem metallischen Werkstoff, Schnappelemente 14, eine Elastomerschicht 16, einen O-Ring 18 und einen Grundkörper 20 aus einem Kunststoff. Die Schnappelemente 14, die Schicht 16, der O-Ring 18 und der Grundkörper 20 bilden ein Kunststoffgehäuse 22

Dieses Kunststoffgehäuse 22 besteht somit aus dem regelmäßig verstärkten Grundkörper 20, der bspw. aus einem faserverstärkten Kunststoff gefertigt ist und die Festigkeitsanforderungen und auch eine ähnliche Wärmedehnung wie das Lenkgehäuse besitzt. An diesem Grundkörper 20 stützt sich ein Dichtelement, der O-Ring 18 und/oder die Elastomerschicht 16, radial ab. Auf diesem Grundkörper 20 ist durch einen Stoffschluss und oder Formschluss ein elastischer Kunststoffwerkstoff, wie zum Beispiel ein Silikonwerkstoff oder ein thermoplastischer Elastomer, der die Elastomerschicht 16 bildet, durch einen Spritzgussprozess angebracht.

Diese Elastomerschicht 16 und/oder der O-Ring 18 stützen sich radial am Grundkörper 20 ab und können dadurch über die Verpressung zum Lenkgehäuse 12 eine Dichtwirkung erzeugen. Auf der Elastomerschicht 16 befinden sich mehrere Schnappelemente 14, die in eine Nut des Lenkgehäuses einrasten können. Die Verbindung zwischen der Elastomerschicht 16 und dem Schnappelement 14 erfolgt bspw. durch einen Stoffschluss und/oder einen Formschluss.

Bei der Schnappfunktion kann die Schicht 16 die notwendige Verformung der Schnappelemente 14 gegenüber dem Grundkörper 20 in einem kleinen Bauraum realisieren, ohne dass die zulässige Dehnung überschritten wird. Um das Kunststoffgehäuse 22 spielfrei in dem Lenkgehäuse 12 zu fixieren, kann die Dimensionierung der Bauteile so gewählt werden, dass die Schnappelemente 14 im montierten Zustand axial vorgespannt sind, wenn sie in einer Lenkgehäusenut eingerastet sind. Dies wird dadurch erreicht, dass die Elastomerschicht 16 axial verpresst wird.

In der Elastomerschicht 16 ist deshalb eine Nut oder eine Vertiefung vorhanden, die im montierten Zustand das Elastomer aufnehmen kann, das durch die Verpressung verdrängt wird. Die Schnappelemente 14 können an der Oberfläche Erhebungen oder Vertiefungen aufweisen. Durch diese formschlüssigen Konturen können die Schnappelemente 14 durch ein Werkzeug aus der Nut aus dem Lenkgehäuse 12 gezogen werden. Wenn die Schnappelemente 14 aus der Nut gezogen sind, kann das Kunststoffgehäuse 22 demontiert werden. Diese Demontage des eingeschnappten Kunststoffgehäuses 22 ist vorteilhaft, wenn eine Reparatur oder eine komplette Zerlegung der gesamten Lenkung durchzuführen ist.

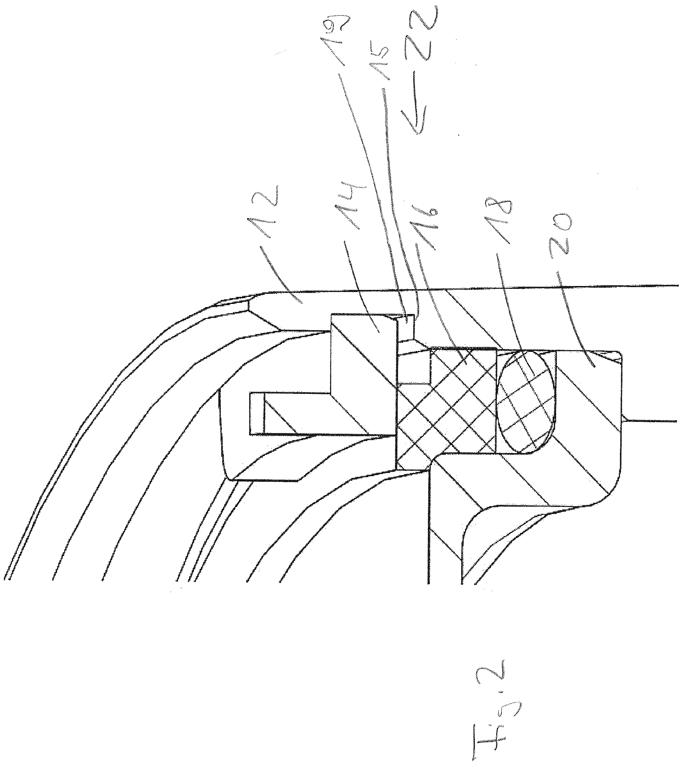

Figur 2 zeigt einen Ausschnitt aus Figur 1. Die Darstellung zeigt das Lenkgehäuse 12, das Schnappelement 14, die Elastomerschicht 16, den O-Ring 18 und den Grundkörper 20. Zu erkennen ist, dass im Lenkgehäuse 12 ein axialer Anschlag 15 für das Kunststoffgehäuse 22, das eine Kunststoffbaugruppe darstellt, vorgesehen ist. Die Elastomerschicht 16 wird axial verformt, wenn das Schnappelement 14 in die Gehäusenut einrastet. Hierzu ist eine Lenkgehäusenut 19 vorgesehen.

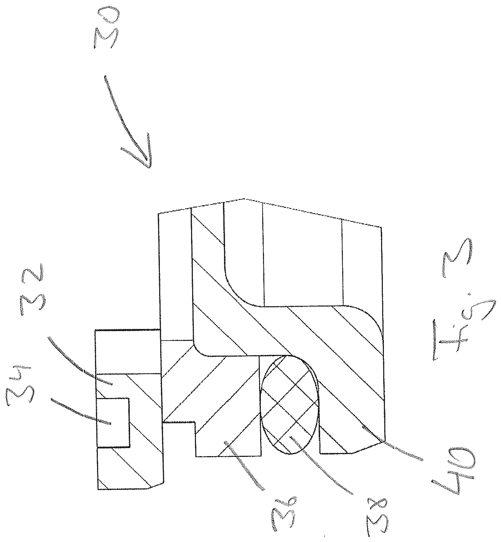

Figur 3 zeigt einen Ausschnitt aus einer weiteren Ausführung des Kunststoffgehäuses 30 mit einem Schnappelement 32, das eine Vertiefung 34 aufweist, einer Elastomerschicht 36, einem O-Ring 38 und einem Grundkörper 40. Die Vertiefung 34 dient zur Demontage, wie vorstehend ausgeführt wurde.

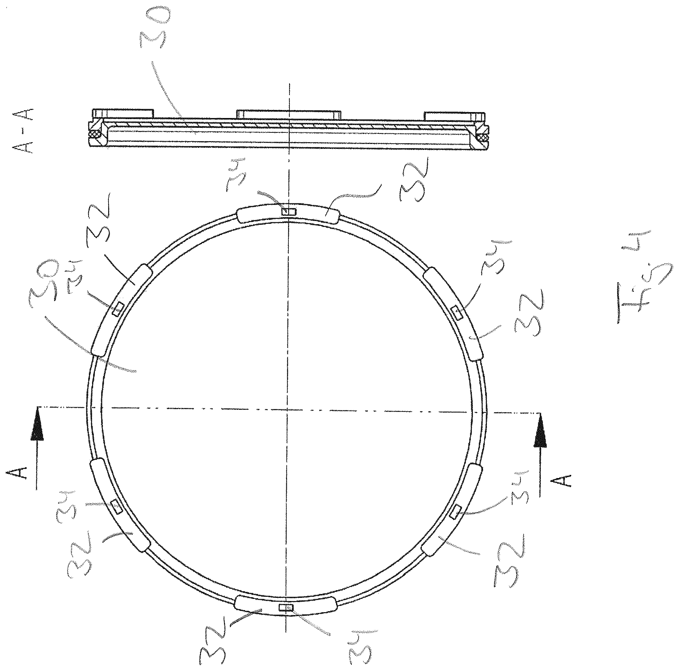

Figur 4 zeigt das Kunststoffgehäuse aus Figur 3 in einer Draufsicht und einer Schnittansicht. Zu erkennen sind die Schnappelemente 32 mit den Vertiefungen 34, die zur Demontage dienen.

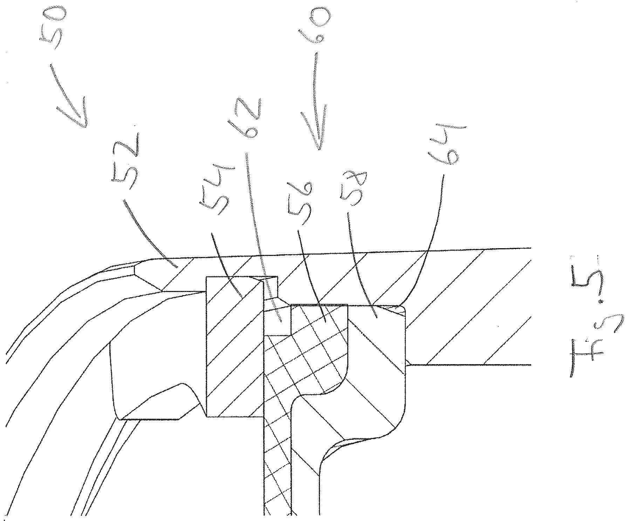

Figur 5 zeigt einen Ausschnitt aus einer weiteren Ausführung eines Gehäuses 50 für ein Lenkgetriebe mit einem Lenkgehäuse 52, einem Schnappelement 54, einer Elastomerschicht 56 und einem Grundkörper 58. Der Grundkörper 58, das Schnappelement 54 und die Elastomerschicht 56 bilden das Kunststoffgehäuse 60. Zu beachten ist, dass bei dieser Ausführung kein O-Ring vorgesehen ist und somit die Elastomerschicht 56 die Dichtfunktion übernimmt. Weiterhin zeigt die Darstellung eine Nut 62 für die axiale Elastomerschicht 56. Darüber hinaus ist eine Einführphase 64 zu erkennen, an der der Grundkörper 58 anliegt. Die Dichtfunktion wird hier durch radiales Verpressen des Elastomer erreicht.

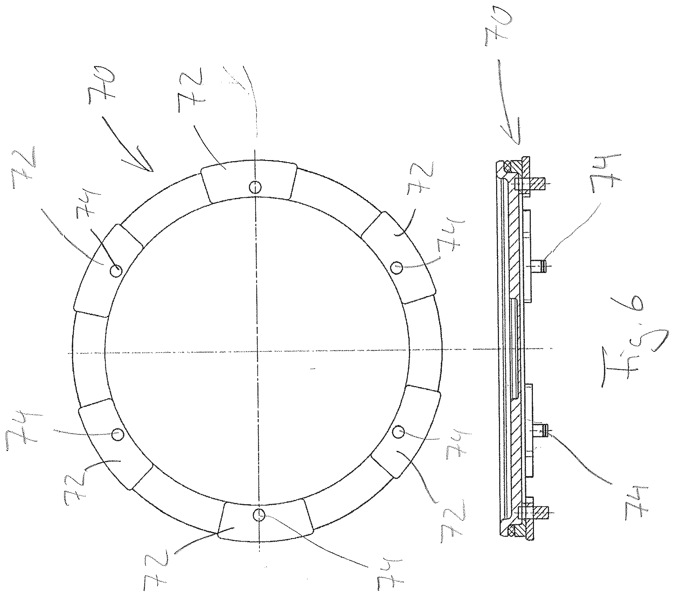

Figur 6 zeigt in einer Draufsicht und einer seitlichen Schnittansicht eine Ausführung eines Kunststoffgehäuses 70, das in diesem Fall als Deckel ausgebildet ist. Die Darstellung zeigt weiterhin Schnappelemente 72 mit jeweils einem Bolzen 74.

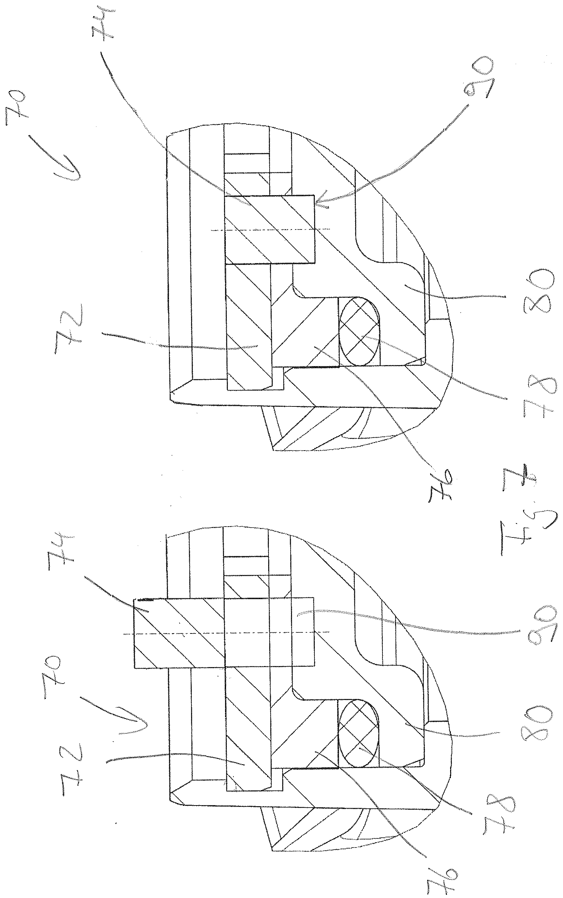

In Figur 7 ist die Ausführung des Kunststoffgehäuses 70 in einer Detailansicht dargestellt. Dabei ist das Kunststoffgehäuse 70 auf der linken Seite in einem entsicherten Zustand und auf der rechten Seite in einem gesicherten Zustand wiedergegeben. Weiterhin sind eine Elastomerschicht 76, ein O-Ring 78 und ein Grundkörper 80 dargestellt. Weiterhin zeigt die Darstellung eine Aussparung 90, die den Bolzen 74 aufnimmt.

Um eine sichere Fixierung des Kunststoffgehäuses 70 im Lenkgehäuse über die gesamte Lebensdauer gewährleisten zu können, ist somit zusätzlich eine Verriegelung zwischen dem Schnappelement 72 und dem Grundkörper 80 vorgesehen. Diese Verriegelung ist in diesem Fall durch den Bolzen 74 gegeben, der beim Spritzgussprozess der Schnappelemente 72 mit hergestellt wird. Die Bolzen 74 stehen nach oben aus den Schnappelementen 72 heraus und sind bspw. mit einem dünnen Verbindungsring jeweils am Schnappelement 72 befestigt. Unter den Bolzen 74 befindet sich in den Schnappelementen 72 und im Grundkörper 80 eine Bohrung.

Wenn der Bolzen 74 in diese Bohrung gepresst wird, bricht der Verbindungsring und der Bolzen 74 verbindet das Schnappelement 72 mit dem Grundkörper 80. Der Bolzen 74 ist so aufgebaut, dass er einen Presssitz in einer der Bohrungen hat, so dass er verliersicher befestigt ist. Diese Pressung kann zusätzlich durch örtliche Erhebungen und Vertiefungen in der Bohrung oder im Bolzen erhöht werden. Dies kann auch durch umlaufende Nuten oder Rillen erfolgen. In jedem Fall ist das Schnappelement 72 formschlüssig verriegelt.

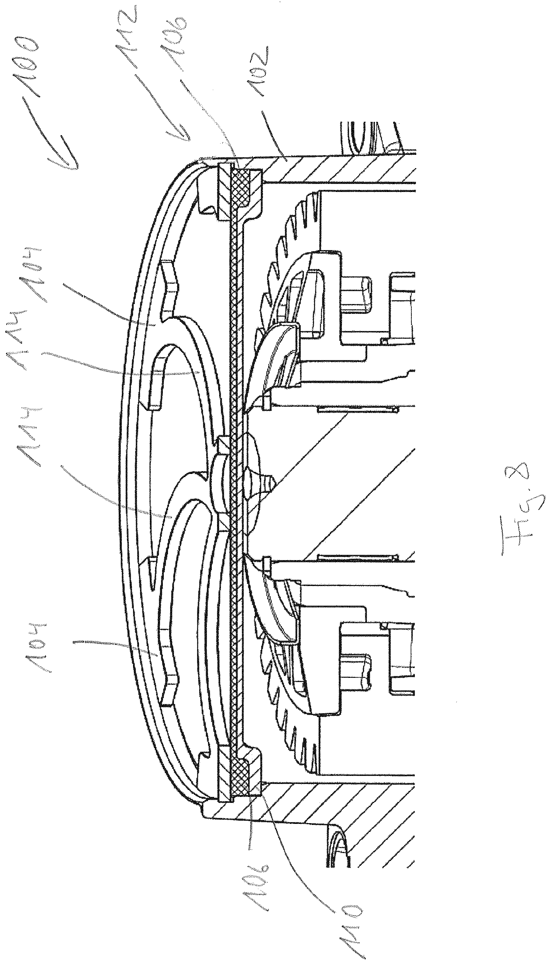

Figur 8 zeigt eine Ausführungsform des beschriebenen Gehäuses 100 für ein Lenkgetriebe. Die Darstellung zeigt ein Lenkgehäuse 102 bspw. aus einem metallischen Werkstoff wie Aluminium, Schnappelemente 104, eine Elastomerschicht 106 und einen Grundkörper 110 aus einem Kunststoff. Die Schnappelemente 104, die Schicht 106 und der Grundkörper 110 bilden ein Kunststoffgehäuse 112. Weiterhin zu erkennen sind Verbindungsstege 114. Über die Verbindungsstege 114 sind die Schnappelemente 104 kraftschlüssig verriegelt. Durch die gebogene Form der Verbindungsstege 114 bekommen diese eine Elastizität, die für die Montage benötigt wird.

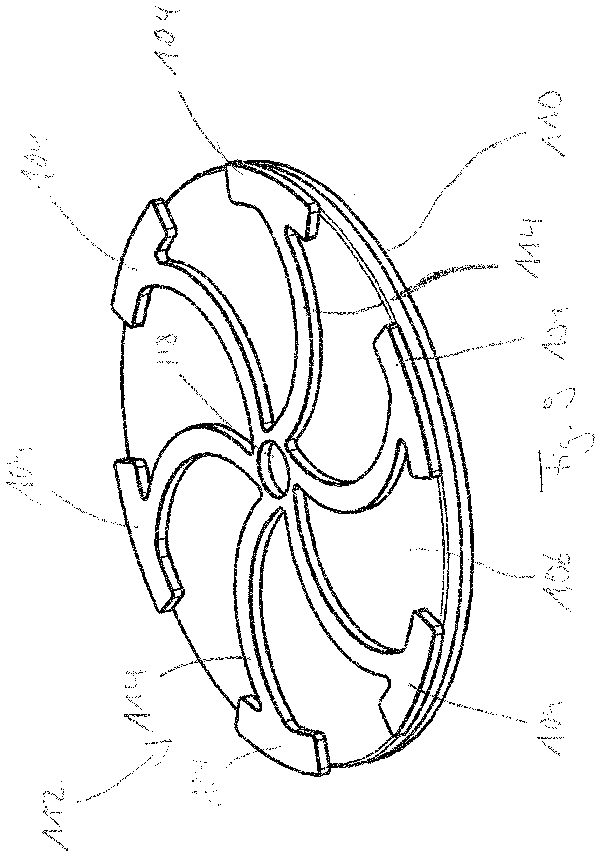

Figur 9 zeigt das Kunststoffgehäuse 112 aus Figur 8 mit den Schnappelementen 104, die über die Verbindungsstege 114 miteinander verbunden sind. Die Abdichtung erfolgt über das verpresste Elastomer. Im Lenkgehäuse 102 ist ein axialer Anschlag für das Kunststoffgehäuse 112. Die Elastomerschicht 106 wird axial verformt, wenn das Schnappelement 104 in die Gehäusenut einrastet.

Die Schnappelemente 104 sind somit über die gewölbten Verbindungsstege 114 miteinander verbunden. Die Verbindungsstege 114 haben ein gemeinsames Zentrum 118, aus dem diese in einer gewölbten bogenartigen Form in die Schnappelemente 104 übergehen.

Wenn das Kunststoffgehäuse 112, das einen Deckel darstellt, montiert wird, bewegen sich die Schnappelemente 104 nach innen. Dabei verformen sich die gewölbten Verbindungsstege 114 elastisch. Dann schnappen die Schnappelemente 104 in die Lenkgehäusenut ein, wobei die Verbindungsstege 114 die Schnappelemente 104 in die Nut drücken. Durch diese gespannten Verbindungsstege 114 ist sichergestellt, dass die Schnappelemente 104 über die Lebensdauer sicher in der Lenkgehäusenut eingerastet bleiben.

Über die Verbindungsstege 114 sind die Schnappelemente 104 verbunden und können dadurch als ein Bauteil günstig hergestellt werden. Da die Schnappelemente 104 ein Bauteil sind, kann dieses leicht über die Elastomerschicht 106 mit dem Grundkörper 110 verbunden werden. Dieser Aufbau des Kunststoffgehäuses 112 eignet sich gut, wenn das Gehäuse eine flache Abdeckscheibe ist.

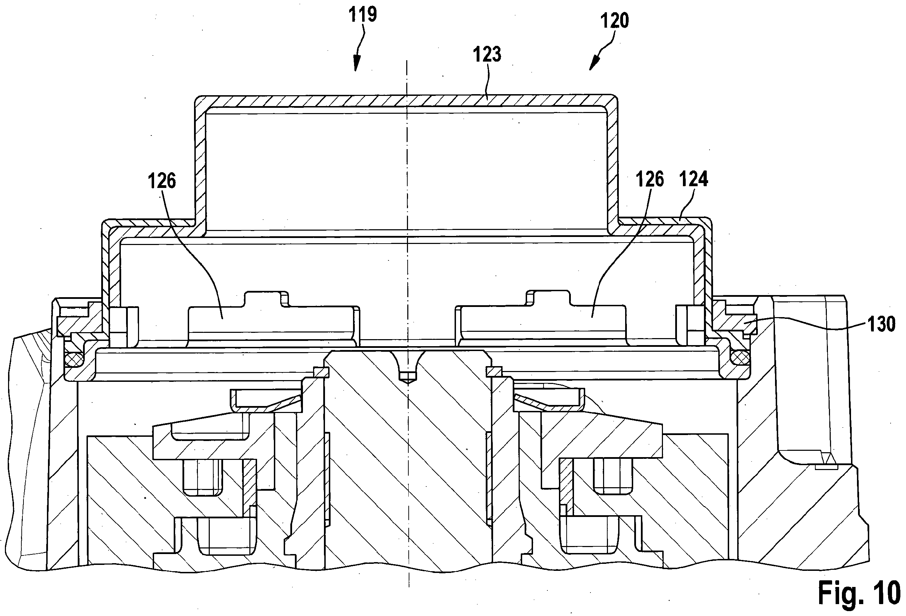

Figur 10 zeigt eine weitere Ausführung des Gehäuses 119 mit einem Kunststoffgehäuse 120, das ein Volumen umschließt, mit einem Grundkörper 123 und einer Elastomerschicht 124. Weiterhin sind Durchbrüche 126 im Grundkörper 123 zu erkennen, welche durch die Elastomerschicht 124 überdeckt sind. Das Kunststoffgehäuse 120 ist durch den Grundkörper 123 und die Elastomerschicht 124 gegeben. Das in diesem Fall zylindrische Kunststoffgehäuse 120 wird im Lenkgehäuse eingebaut, wobei die Schnappelemente 130 sich gegen die Elastomerschicht 124 radial in die Durchbrüche 126 im Grundkörper 123 bewegen können. Die Abdichtung erfolgt über das radial verpresste Elastomer und/oder einen O-Ring. Im Lenkgehäuse ist ein axialer Anschlag für das Kunststoffgehäuse 120, das eine Kunststoffbaugruppe bildet, vorgesehen. Die Elastomerschicht 124 wird axial verformt, wenn das Schnappelement in die Gehäusenut einrastet.

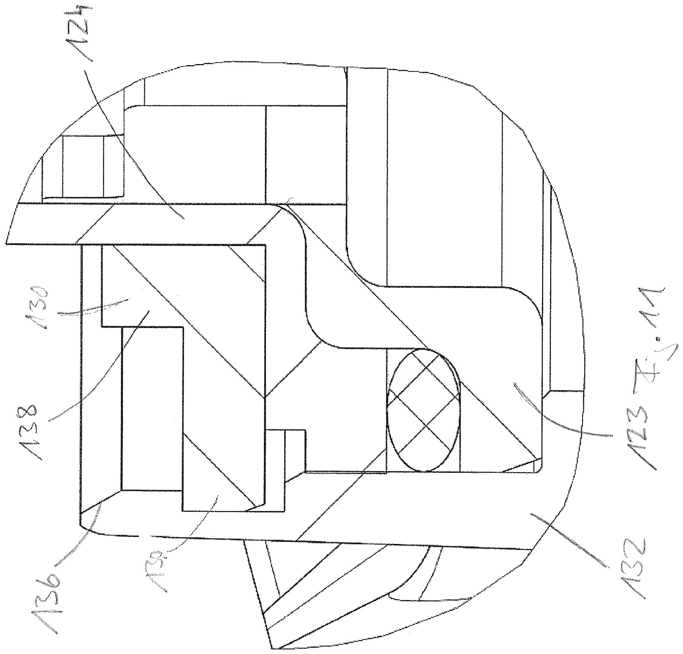

Figur 11 gibt einen Ausschnitt aus Figur 10 wieder. Die Darstellung zeigt ein Schnappelement 130 mit einer Nase 138, die Elastomerschicht 124, den Grundkörper 123 und einen metallischen Körper 132 als Lenkgehäuse. Weiterhin zeigt die Darstellung eine Einführphase 136.

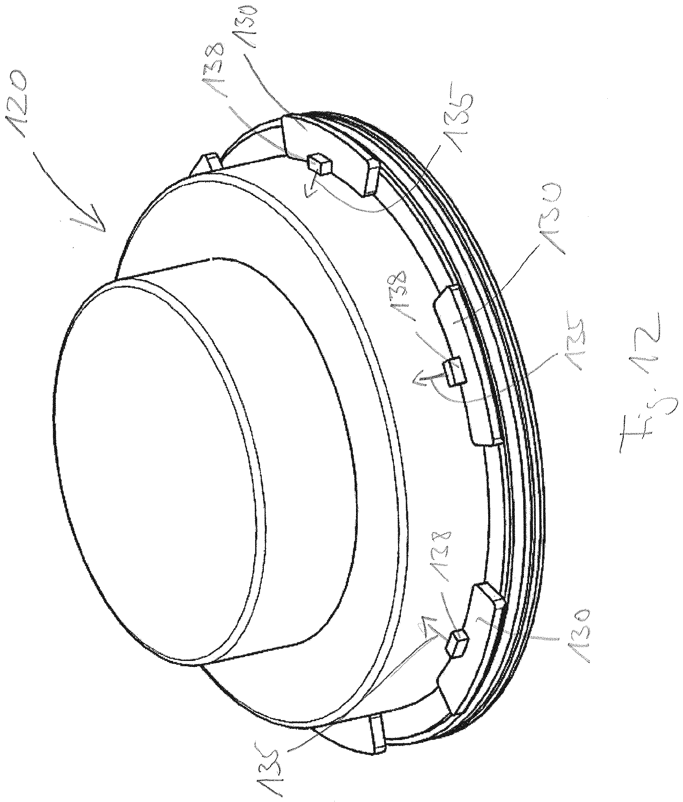

Das Kunststoffgehäuse 120, das als Deckel ausgebildet ist, ist in einer perspektivischen Ansicht in Figur 12 dargestellt. Zu erkennen sind die Schnappelemente 130 mit den Nasen 138. Diese müssen zur Demontage nach innen, in Richtung der Pfeile 135 bewegt werden.

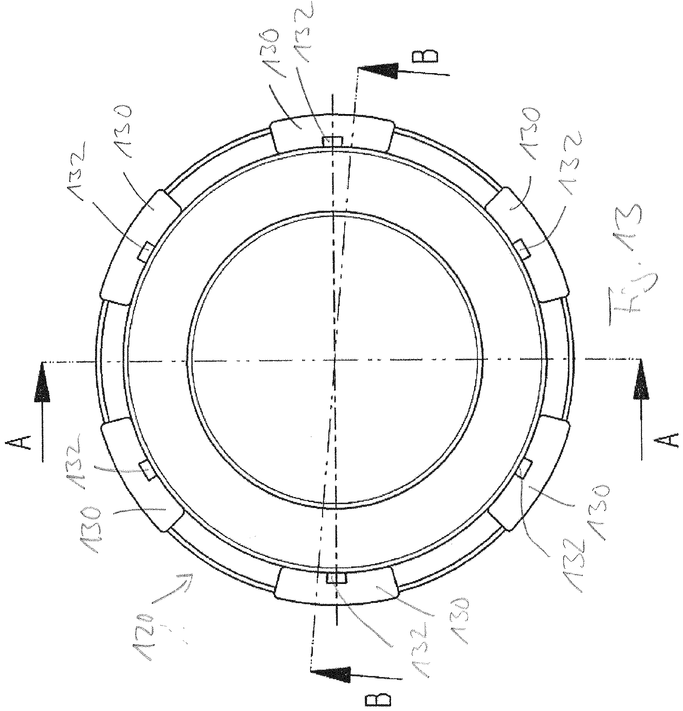

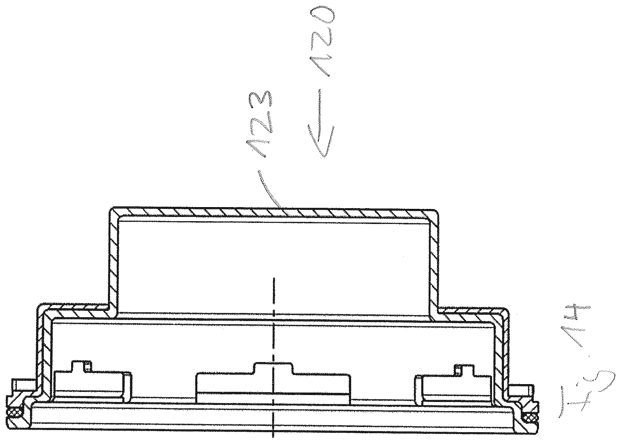

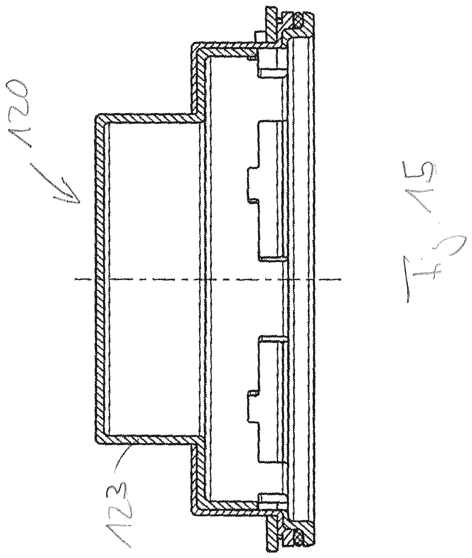

Figur 13 zeigt das Kunststoffgehäuse 120 in einer Draufsicht, Figuren 14 und 15 zeigen das Kunststoffgehäuse 120 jeweils in einer geschnittenen Seitenansicht.

Wenn das Kunststoffgehäuse 120 montiert wird, bewegt sich das Schnappelement 130 nach innen. Dabei tauchen die Schnappelemente 130 in Ausschnitte im Grundkörper 123 nach innen. Die Elastomerschicht 126 überdeckt die Ausschnitte im Grundkörper 123. Die Elastomerschicht 126 wird dabei gedehnt und drückt die Schnappelemente 130 nach außen in die Lenkgehäusenut. Durch die gespannte Elastomerschicht 126 ist sichergestellt, dass die Schnappelemente 130 über die Lebensdauer sicher in der Lenkgehäusenut eingerastet bleiben.

Durch diesen Aufbau kann ein Lenkgehäuse mit einem zylindrischen Kunststoffgehäuse 120 in einem kleinen Bauraum durch eine Schnappverbindung verbunden werden.

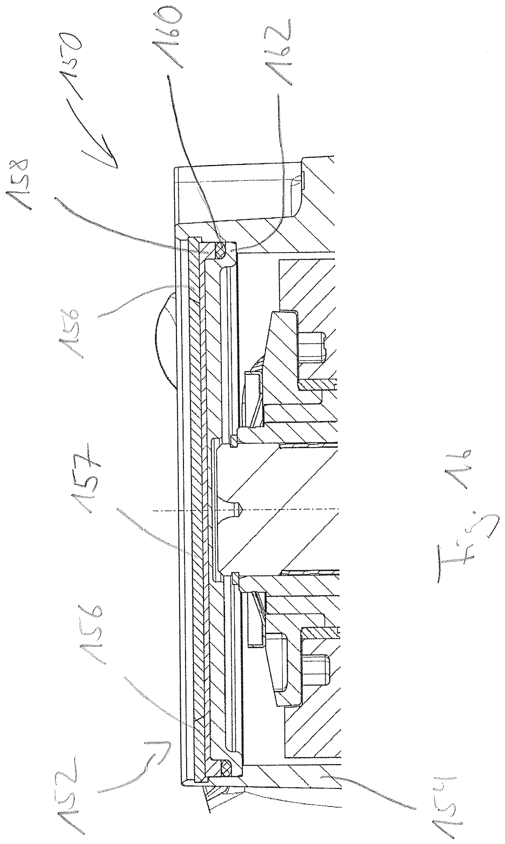

Figur 16 zeigt eine weitere Ausführung des Gehäuses, das insgesamt mit der Bezugsziffer 150 versehen ist. Dieses Gehäuse 150 umfasst ein Kunststoffgehäuse 152, das mit einem Lenkgehäuse 154 zusammenwirkt. Weiterhin sind ein mehrteiliges Verriegelungselement 156, ein Riegelschieber 157, eine Elastomerschicht 158, ein O-Ring 160 und ein Grundkörper 162 dargestellt. Figur 16 zeigt den verriegelten Zustand.

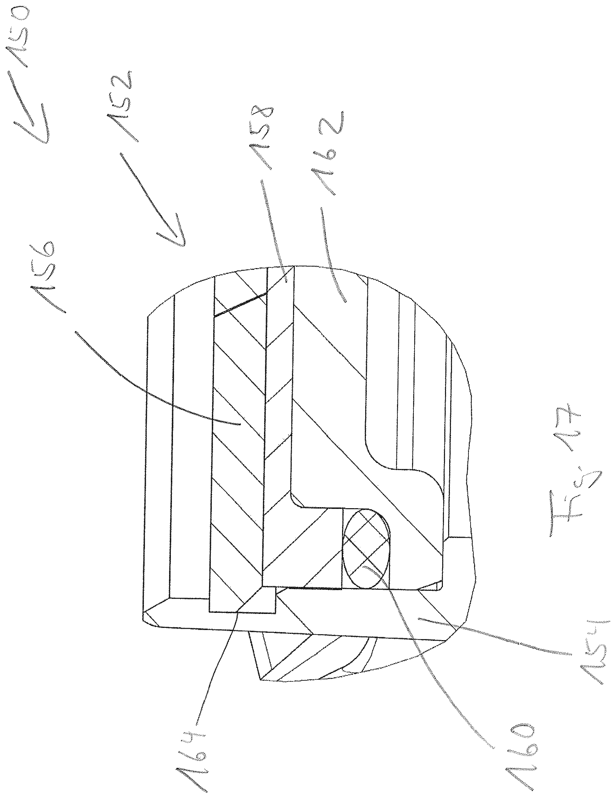

Figur 17 zeigt einen Ausschnitt aus Figur 16. Zu erkennen ist, wie das Verriegelungselement 156 in eine Lenkgehäusenut 164 eingreift.

Bei dieser Ausführung ist das Kunststoffgehäuse 152 im Lenkgehäuse 154 eingebaut. Die Riegelelemente, die das Verriegelungselement 156 bilden, sind in die Lenkgehäusenut 164 eingeschoben. Der Riegelschieber 157 hat seine Endlage erreicht. Die Abdichtung erfolgt über den O-Ring 160 und/oder über die verpresste Elastomerschicht 158. Dabei wird die Elastomerschicht 158 axial verformt, wenn das Verriegelungselement 157 in die Lenkgehäusenut 164 eingeschoben wird. Dadurch sitzt das Kunststoffgehäuse 152 spielfrei im Lenkgehäuse 154 und kann keine Klappergeräusche verursachen.

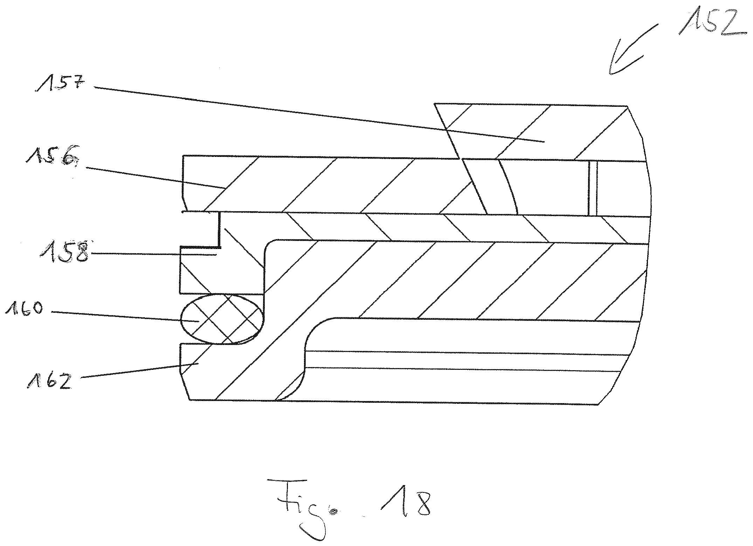

Figur 18 zeigt das Kunststoffgehäuse 152 im nicht verriegelten Zustand.

Die Darstellung zeigt das Kunststoffgehäuse 150 vor dem Einbauen in das Lenkgehäuse 154. Die Riegelelemente 156 stehen nicht über den Grundkörper 162 heraus. Bei der Montage des Kunststoffgehäuses 152 in das Lenkgehäuse 154 erfolgt kein Einrasten. Der Riegelschieber 157 hat seine Ausgangsposition vor dem Einbau des Kunststoffgehäuses 152. Die Elastomerschicht 158 wird axial verformt, wenn das Verriegelungselement 156 in die Lenkgehäusenut 164 einrastet. In der Elastomerschicht 158 ist eine Nut oder eine Vertiefung vorgesehen, die das verdrängte Elastomer in der Einbaulage aufnehmen kann.

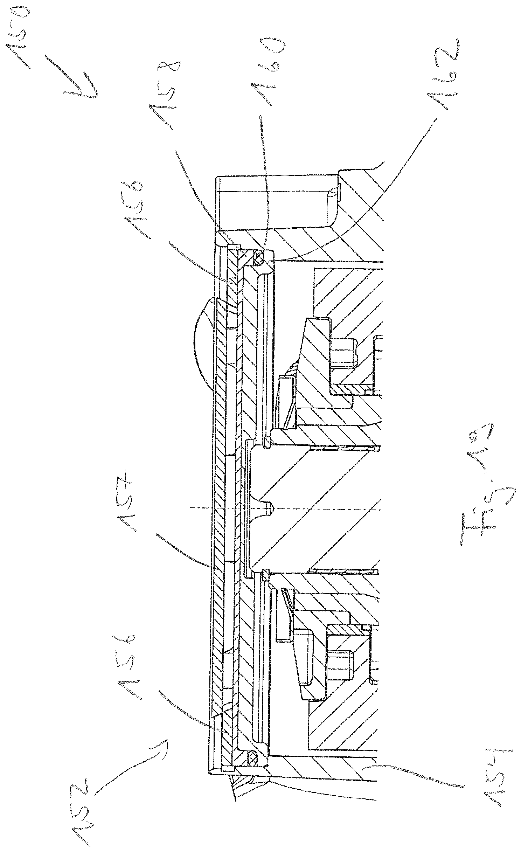

Figur 19 zeigt das Kunststoffgehäuse 152 dieser Ausführungsform im nicht verriegelten Zustand.

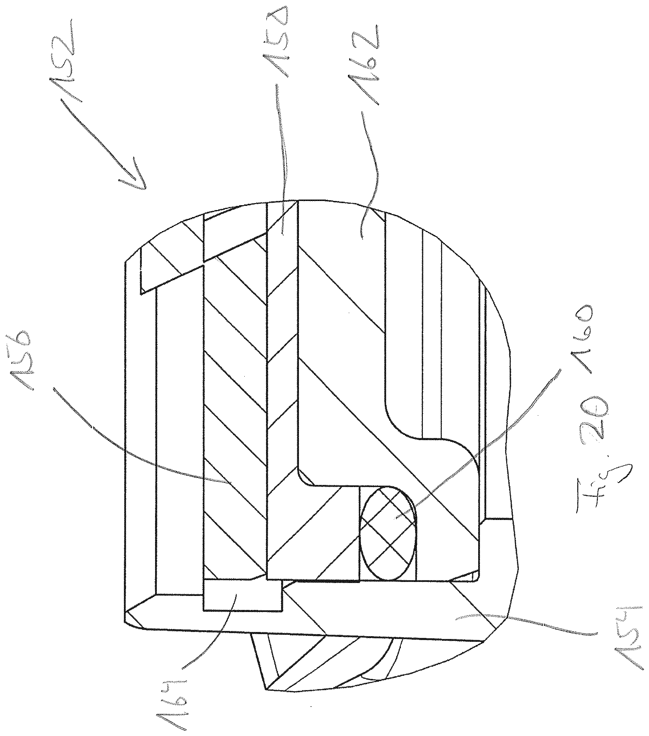

Figur 20 zeigt einen Ausschnitt aus Figur 19 und damit ebenfalls den nicht verriegelten Zustand. Das dargestellte Riegelelement des Verriegelungselements 156 greift dabei nicht in die Lenkgehäusenut 164 ein.

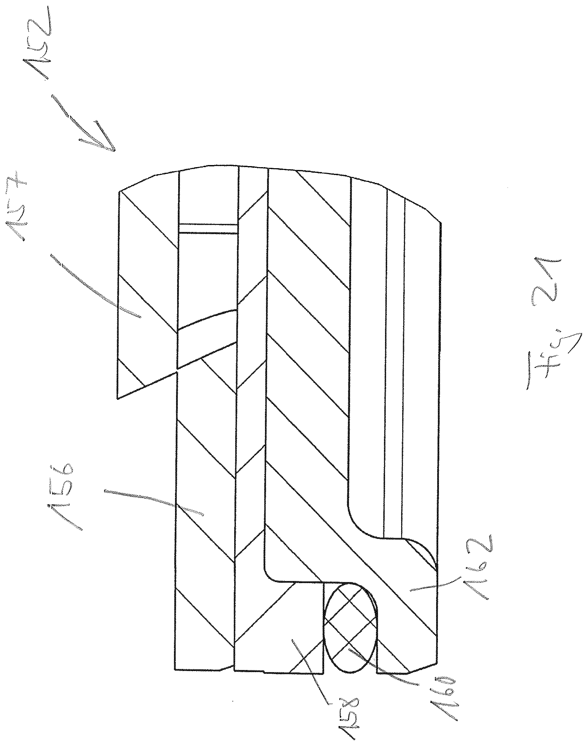

Figur 21 verdeutlicht nochmals das Kunststoffgehäuse 152 im nicht verriegelten Zustand.

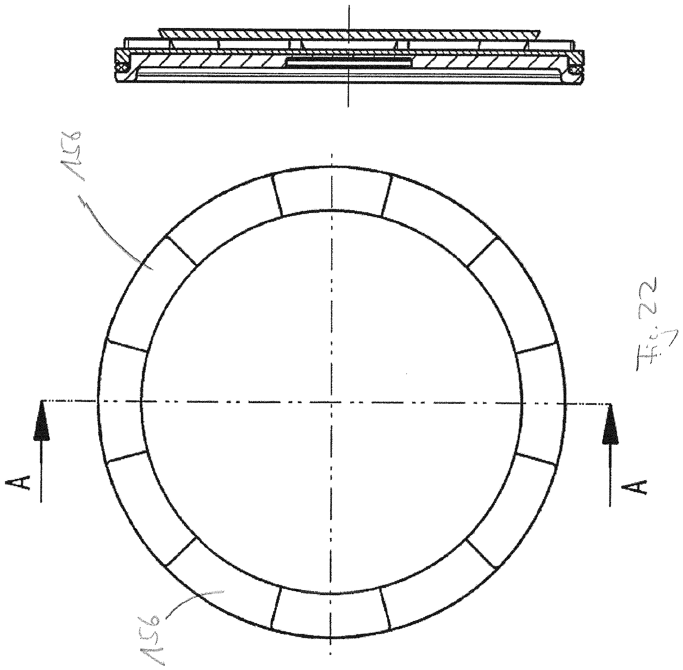

Figur 22 zeigt das Kunststoffgehäuse 152 in einer Draufsicht und einer geschnittenen Seitenansicht. Deutlich ist das mehrteilige Verriegelungselement 156 zu erkennen, das aus mehreren, über den Umfang verteilten Riegelelementen besteht.

Bei der Riegelfunktion kann die Elastomerschicht 158 die notwendige Verformung der Riegelelemente gegenüber dem Grundkörper 162 in einem kleinen Bauraum realisieren, ohne dass die zulässige Dehnung überschritten wird. Um das Kunststoffgehäuse 152 spielfrei in dem Lenkgehäuse 154 zu fixieren, kann die Dimensionierung der Bauteile so gewählt werden, dass die Riegelelemente in montiertem Zustand axial vorgespannt sind, wenn sie in der Lenkgehäusenut 164 eingeschoben sind. Dies wird dadurch erreicht, dass die Elastomerschicht 158 axial verpresst wird. In der Elastomerschicht 158 ist deshalb eine Nut oder Vertiefung vorhanden, die in montiertem Zustand das Elastomer aufnehmen kann, das durch die Verpressung verdrängt wird.

Die Riegelelemente werden durch den Riegelschieber 157 so bewegt, dass die Riegelelemente in die Nut 164 des Lenkgehäuses einrasten. Der Riegelschieber 157 kann ein separates Bauteil sein oder auch mit den Riegelelementen über einen Verbindungssteg ein Bauteil bilden. Beim Bewegen des Riegelschiebers 157 bricht der Verbindungssteg. Wenn der Riegelschieber sich in Richtung Grundkörper bewegt, werden die Riegelelemente durch die Schräge nach außen geschoben. Wenn der Riegelschieber 157 seine Endlage erreicht hat, kann dieser in einen Hinterschnitt am Grundkörper 162 oder am Riegelelement einrasten, so dass die Riegelelemente in der Lenkgehäusenut 164 eingerastet bleiben.

Der Riegelschieber 157 kann auch so ausgebildet sein, dass dieser durch eine Drehbewegung die Riegelelemente nach außen bewegt und in die Lenkgehäusenut 164 schiebt. Wenn der Riegelschieber 157 die erforderliche Drehbewegung ausgeführt hat, kann dieser durch einen Formschluss mit dem Grundkörper 162 oder dem Riegelelement verrasten. Dadurch wird der verriegelte Zustand angezeigt und gesichert.

Durch eine Bewegung des Riegelschiebers 157 werden die Riegelelemente so bewegt, dass diese einen Formschluss zu Lenkgehäuse 154 erzeugen. Der Riegelschieber 157 und/oder die Riegelelemente können Formelemente haben, die ein Bewegen der Elemente zulassen. Damit ist die Demontage des Kunststoffgehäuses möglich.

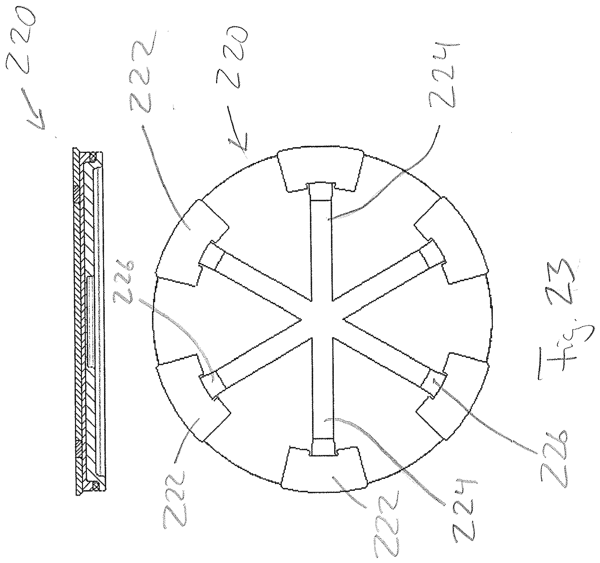

Figur 23 zeigt eine Ausführung des Kunststoffgehäuses 220 in einer Draufsicht und in geschnittener Seitenansicht im verriegelten Zustand. Weiterhin zeigt die Darstellung Riegelelemente 222, Stützelemente 224 und Riegelschieber 226.

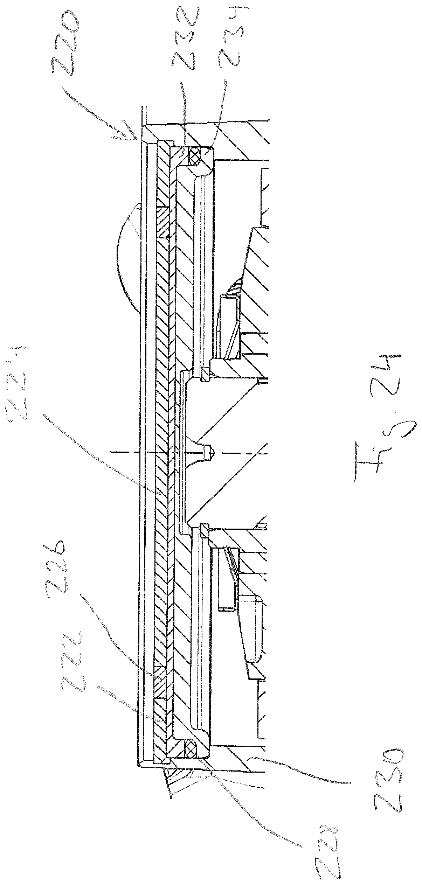

Figur 24 zeigt das Kunststoffgehäuse 220 im Lenkgehäuse 230 eingebaut. Dabei sind die Riegelelemente 222 in die Lenkgehäusenut eingeschoben. Der Riegelschieber 226 hat seine Endlage erreicht. Die Abdichtung erfolgt über einen O-Ring 228 und/oder über eine verpresste Elastomerschicht 232. Diese wird axial verformt, wenn das Riegelelement 222 in die Lenkgehäusenut eingeschoben wird. Dadurch sitzt das Kunststoffgehäuse 220 spielfrei im Lenkgehäuse 230 und kann keine Klappergeräusche verursachen. Weiterhin ist ein Grundkörper 234 zu erkennen.

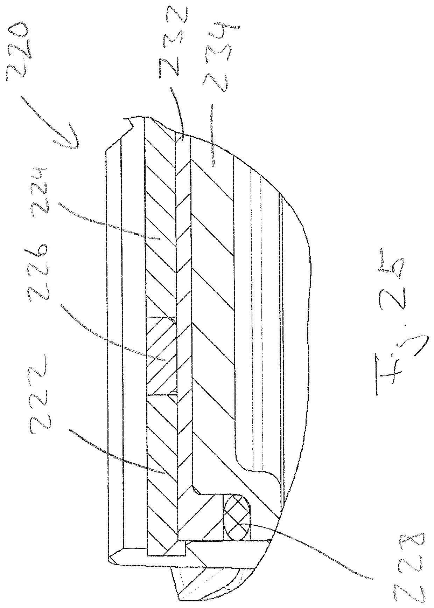

Figur 25 zeigt einen Ausschnitt aus dem Kunststoffgehäuse 220 im verriegelten Zustand.

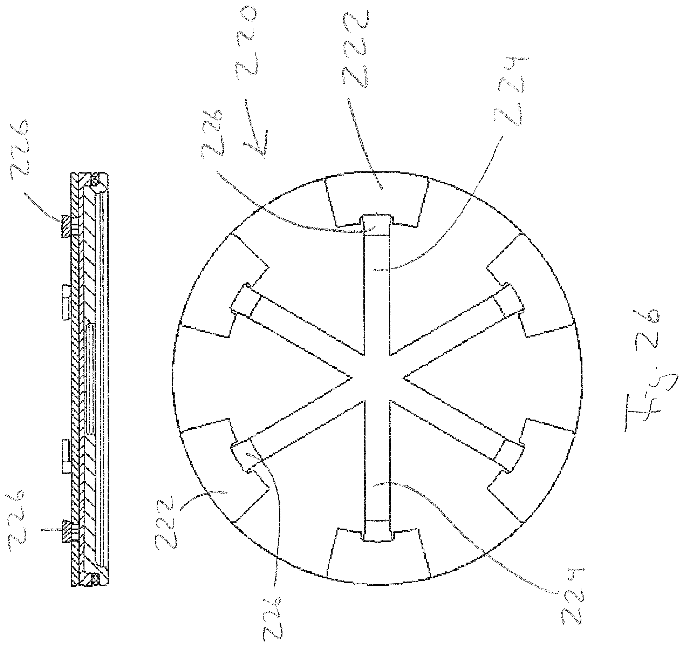

Figur 26 zeigt den Grundkörper 220 entriegelt in Draufsicht und Schnittansicht.

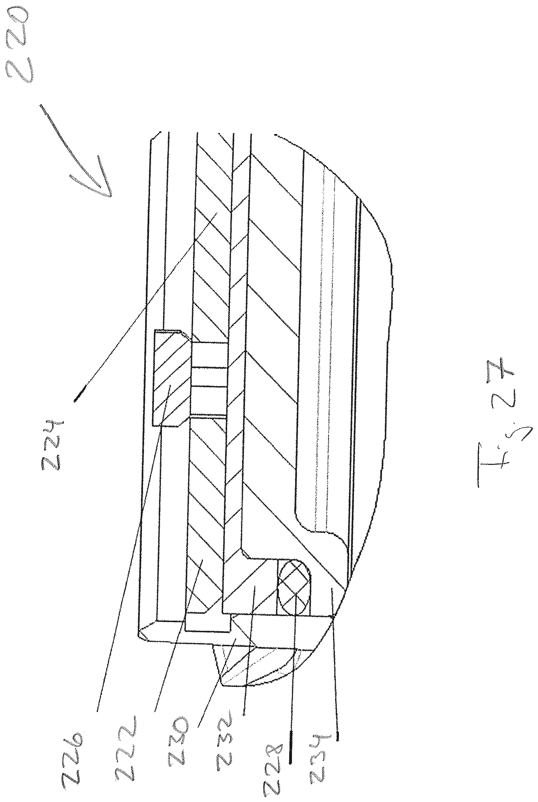

Figur 27 zeigt das Kunststoffgehäuse 220 mit dem Stützelement 224, dem Riegelschieber 226, der als einschiebbar Dübel ausgebildet ist, dem Riegelelement 222, der Elastomerschicht 232, dem O-Ring 228 und dem Grundkörper 234.

Das Kunststoffgehäuse 220 ist im Lenkgehäuse montiert, ohne dass die Riegelelemente 222 durch den Riegelschieber 226 verschoben sind. Die Riegelelemente 222 sind nicht in die Lenkgehäusenut geschoben. Der Riegelschieber 226 befindet sich in der Ausgangsposition. Die Riegelelemente 222 stehen nicht über den Grundkörper 234 über. Bei der Montage des Kunststoffgehäuses 220 in das Lenkgehäuse erfolgt kein Einrasten. Der Riegelschieber 226 nimmt seine Ausgangsposition vor dem Verbau des Kunststoffgehäuses 220 ein. Die Elastomerschicht 232 wird axial verformt, wenn das Riegelelement 222 in die Lenkgehäusenut einrastet. In der Elastomerschicht 232 ist eine Nut oder eine Vertiefung, die das verdrängte Elastomer in der Einbaulage aufnehmen kann.

Die Riegelelemente 222 werden durch Riegelschieber 226 so bewegt, dass die Riegelelemente 222 in die Nut des Lenkgehäuses einrasten. Jedes Riegelelement 222 hat einen eigenen Riegelschieber 226, der an der dem Grundkörper 234 zugewandten Stirnseite kegelförmig gestaltet ist. Wenn die Riegelschieber 226 in Richtung Grundkörper 234 bewegt werden, werden die Riegelelemente 222 radial nach außen geschoben, weil die Riegelschieber 226 auf der den Riegelelementen 222 gegenüberliegenden Seite an einem Stützelement 224 geführt werden. Durch eine entsprechende Gestaltung sowie Positionierung des Stützelements 224 an dem Kunststoffgehäuse 220 kann eine Verschiebung des Stützelements 224 relativ zum Grundkörper 234 verhindert werden.

Der Riegelschieber 226 kann jeweils ein separates Bauteil sein oder es können auch alle Riegelschieber 226 miteinander verbunden sein, um den Montageprozess zu beschleunigen. Weiterhin können auch die Riegelelemente 222, die Riegelschieber 226 und das Stützelement 224 durch dünne Verbindungsstege bzw. Sollbruchstellen miteinander verbunden sein, um den Fertigungs- und Montageprozess zu vereinfachen. Diese Sollbruchstellen brechen dann bei der Montage des Kunststoffgehäuses 220, wenn mit einer definierten Kraft die Riegelschieber 226 in Richtung Grundkörper 234 gedrückt werden.

Nach dem Einsetzen des Kunststoffgehäuses 220 in das Lenkgehäuse werden die Riegelschieber 226 mit einer bestimmten Kraft in Richtung Grundkörper 234 gedrückt. Dabei werden die Riegelschieber 226 zwischen die Riegelelemente 222 und das Stützelement 224 geschoben. Aufgrund der Geometrie der Riegelelemente 222 in Verbindung mit dem nicht verschiebbaren Stützelement 224 werden die Riegelelemente 222 radial nach außen in die Lenkgehäusenut geschoben. Die Kontaktflächen zwischen den Riegelschiebern 226 und den Riegelelementen 222 und/oder dem Stützelement 224 können Erhöhungen und/oder Vertiefungen bzw. Hinterschnitte haben, damit die Riegelschieber 226 in der unteren Position verbleiben und somit sicher in der Lenkgehäusenut eingerastet sind. Die Riegelschieber 226 können Formelemente haben, die ein Herausziehen zulassen. Damit ist die Demontage des Kunststoffgehäuses 220 möglich.

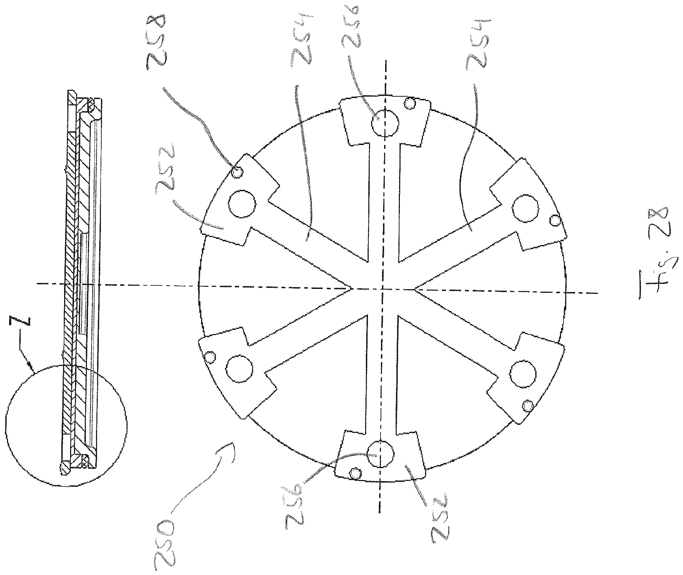

Figur 28 zeigt ein Kunststoffgehäuse 250 in Draufsicht und Schnittansicht mit Schnappelementen 252, Verbindungsstege 254, Öffnungen 256 für ein Montagewerkzeug und Verdrehsicherungen 258. Dieses Kunststoffgehäuse 250 ist für ein Verdrehen ausgelegt.

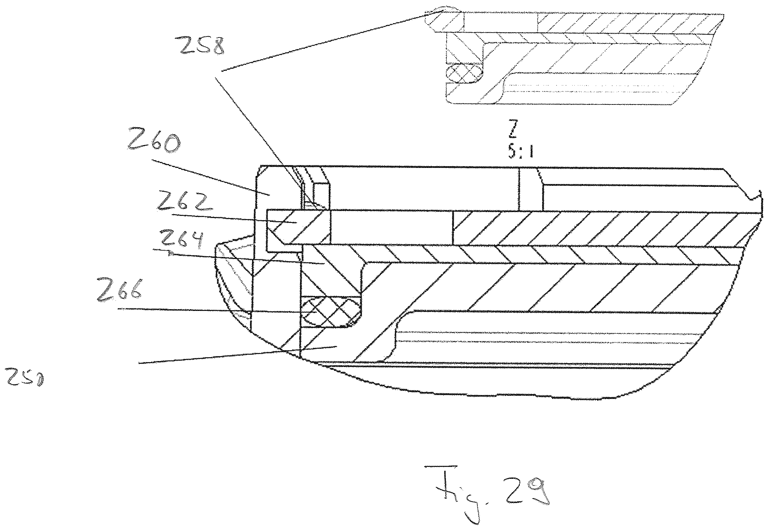

In Figur 29 ist dieses Kunststoffgehäuse 250 zusammen mit einem Lenkgehäuse 260 wiedergegeben. Die Darstellung zeigt weiterhin ein Riegelelement 262, eine Elastomerschicht 264 und einen O-Ring 266.

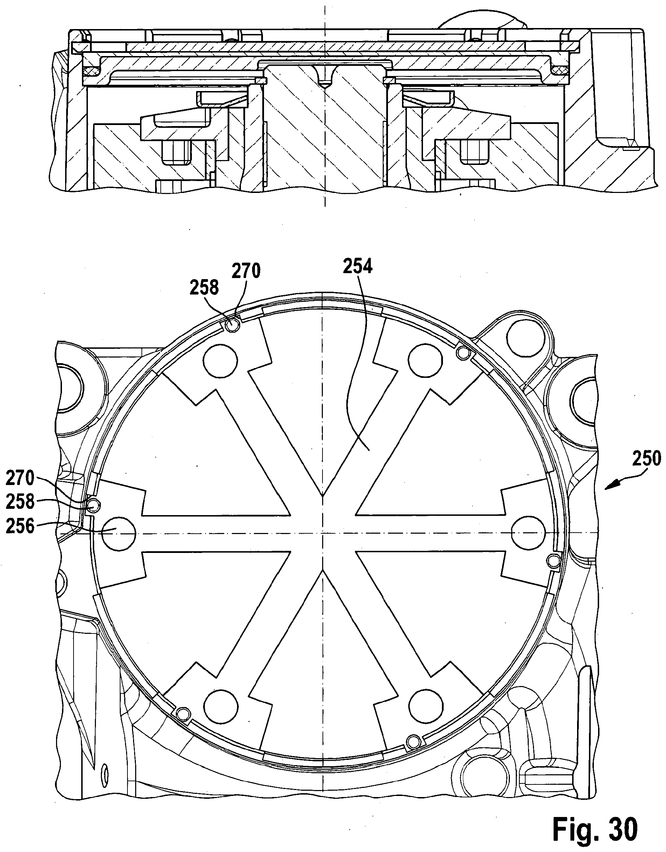

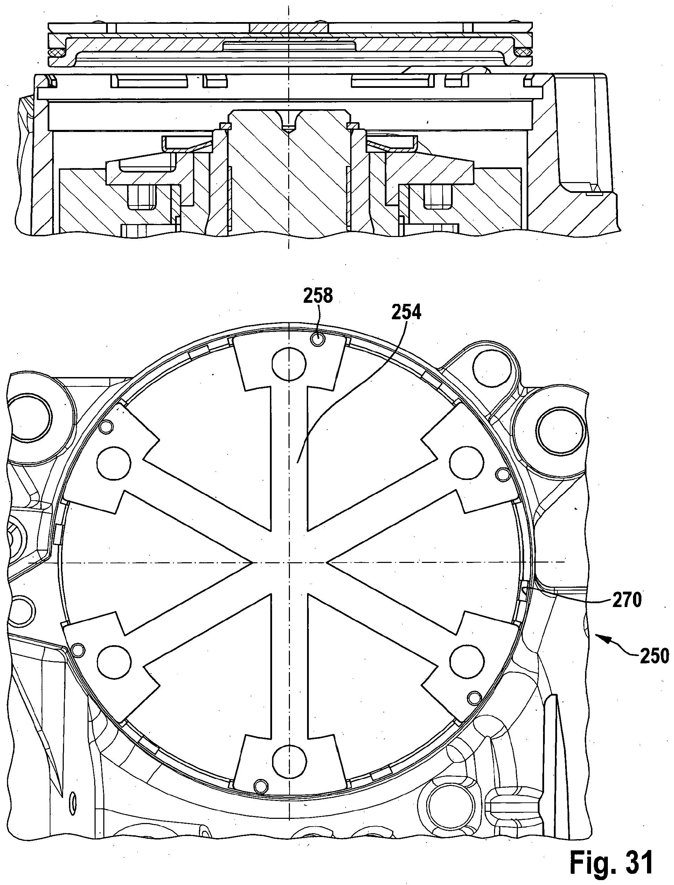

Weitere Darstellungen sind in der Figur 30, in der der verdrehte Endzustand mit in Nuten 270 eingerastete Verdrehsicherungen bzw. Drehelemente 258 dargestellt ist, und der Figur 31, in der das Kunststoffgehäuse 250 als Deckel zwar aufgesetzt aber noch nicht verdreht ist, gegeben. Somit zeigt Figur 30 das Kunststoffgehäuse 250 im Lenkgehäuse in einer Position nach der Montage, Figur 31 die Position vor der Montage.

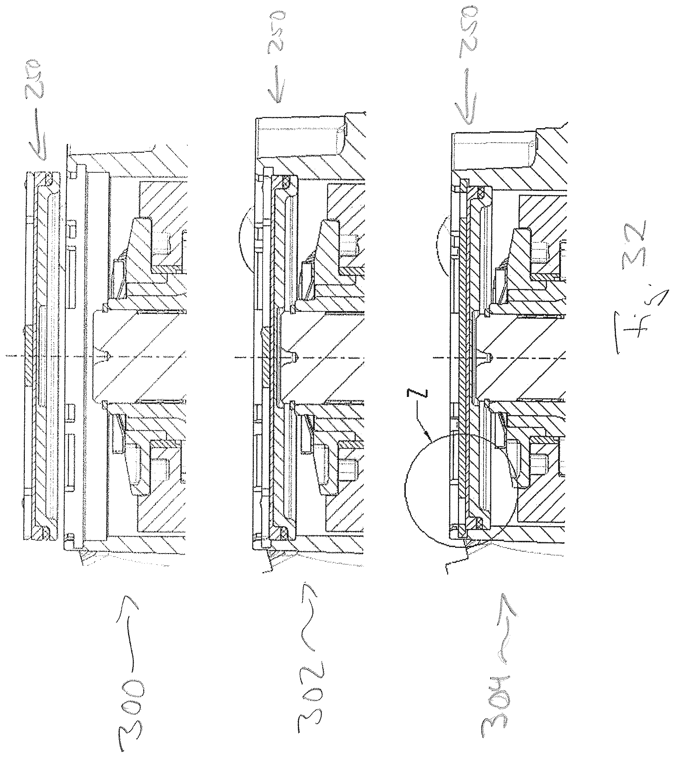

Figur 32 zeigt die Montage selbst, nämlich einen ersten Schritt 300, bei dem das Kunststoffgehäuse 250 zugeführt wird und eine Orientierung der Drehelemente des Kunststoffgehäuses 250 in Richtung der Aussparung des Lenkgehäuses erfolgt, einen zweiten Schritt 302, bei dem das Kunststoffgehäuse 250 bis zum Endanschlag im Lenkgehäuse axial verschoben wird, und einen dritten Schritt, bei dem das Kunststoffgehäuse 250 relativ zum Lenkgehäuse mit definiertem Drehwinkel verdreht wird.

Um das Kunststoffgehäuse 250 spielfrei im Lenkgehäuse zu fixieren, kann die Dimensionierung der Bauteile so gewählt werden, dass die Drehelemente im montierten Zustand axial vorgespannt sind, wenn sie in der Lenkgehäusenut eingerastet sind. Dies wird dadurch erreicht, dass die Elastomerschicht axial verpresst wird. In der Elastomerschicht ist deshalb eine Nut oder eine Vertiefung vorgesehen, die im montierten Zustand das Elastomer aufnehmen kann, das durch die Verpressung verdrängt wird.

Der Durchmesser der mit dem Kunststoffgehäuse 250 verbundenen Drehelemente ist etwas größer als der Außendurchmesser des Grundkörpers. Die Drehelemente ragen radial über den Grundkörper hinaus, entsprechend der Nuttiefe im Lenkgehäuse. Im Lenkgehäuse sind die Bereiche, in denen sich die Drehelemente des Kunststoffgehäuses 250 befinden, entsprechend ausgespart, so dass das Kunststoffgehäuse 250 in das Lenkgehäuse in axialer Richtung eingesetzt werden kann. Nach dem Einsetzen des Kunststoffgehäuses 250 in das Lenkgehäuse wird das Kunststoffgehäuse 250 um einen definierten Winkel gedreht. Dabei werden die Drehelemente des Kunststoffgehäuses 250 in die Nuten des Lenkgehäuses geschoben und somit die Gehäuse miteinander fest verbunden.

Um ein Lösen dieser Verbindung während des Betriebs zu verhindern, können die Drehelemente axiale Erhebungen und oder Vertiefungen besitzen. Diese Erhebungen bzw. Vertiefungen befinden sich auf der dem Grundkörper abgewandten Seite der Drehelemente und korrespondieren mit entsprechenden Elementen des Lenkgehäuses. Auf diese Weise wird gewährleistet, dass das Kunststoffgehäuse 250 über die gesamte Lebensdauer in dieser Position verbleibt und somit sicher in der Lenkgehäusenut eingerastet ist.

Die Verdrehung des Kunststoffgehäuses 250 während der Montage kann mit einem Werkzeug erfolgen, das in Öffnungen und/oder Erhebungen greift, die bspw. an den Drehelementen angebracht sind.

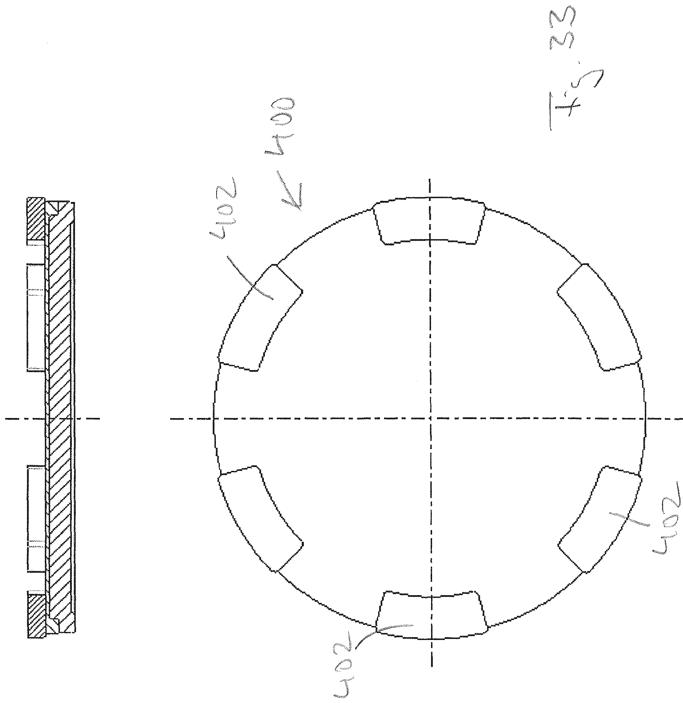

Figur 33 zeigt eine Ausführung eines Kunststoffgehäuses, in Draufsicht und Schnittansicht, das insgesamt mit der Bezugsziffer 400 bezeichnet ist. Weiterhin sind am Umfang Schappelemente 402 vorgesehen.

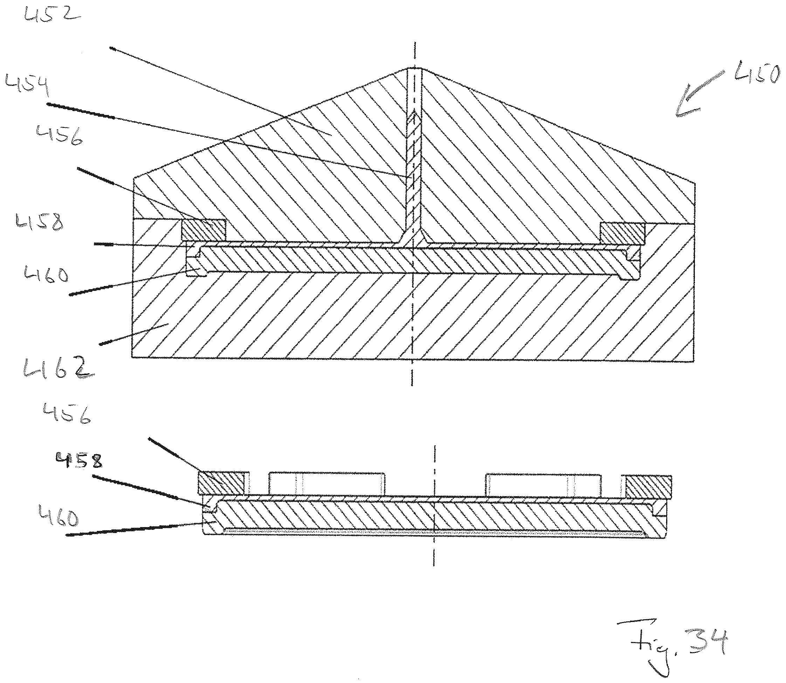

Figur 34 zeigt eine Anordnung zum Anbringen einer Elastomerschicht, die insgesamt mit der Bezugsziffer 450 bezeichnet ist. Die Darstellung zeigt ein Werkzeugoberteil 452, einen Anguss 454, ein Riegel- und/oder Schnappelement 456, eine Elastomerschicht 458, einen Grundkörper 460, ein Werkzeugunterteil 462.

Somit kann der Grundkörper 460 und die Schnapp- bzw. Riegelemente 456 in einem ersten Spritzgussprozess aus einem verstärkten Material hergestellt werden. Danach werden diese beiden Bauteile in einem zweiten Spritzgussprozess mit der Elastomerschicht verbunden.

Der Grundkörper 460 sowie die Schnapp- und/oder Riegelelemente 456 können durch verschiedene Angussverfahren hergestellt werden, wie bspw. durch Stangenanguss oder Schirmanguss. Beim zweiten Spritzgussprozess, wenn die Elastomerschicht 458 zwischen die beiden verstärkten Komponenten gespritzt wird, sollte dagegen ein Angussverfahren mit einem zentralen Angusskanal in der Achsmitte verwendet werden, der die Kavität gleichmäßig über den gesamten Umfang füllt, bspw. ein Stangenanguss bzw. ein Schirmanguss. Dadurch wird gewährleistet, dass die Dichtlippe der Elastomerschicht 458 sehr formgenau ist und keine Fehlstellen enthält, weil Blindnähte innerhalb der Elastomerschicht 458 sowie Formfehler ausgeschlossen sind, die in Verbindung mit mehreren Angusskanälen vorhanden sein können.

## Patentansprüche

1. Verfahren zum Herstellen eines Kunststoffgehäuses für ein Gehäuse eines Lenkgetriebes, bei dem in einem ersten Schritt ein Grundkörper und mindestens ein Verschlusselement hergestellt werden und in einem zweiten Schritt eine Elastomerschicht über mindestens einen Angusspunkt in einem Angussprozess aufgebracht wird, die den Grundkörper und das mindestens eine Verschlusselement miteinander verbindet.

2. Verfahren nach Anspruch 1, bei dem in dem zweiten Schritt über genau einen Angusspunkt die Elastomerschicht aufgebracht wird.

3. Verfahren nach Anspruch 1 oder 2, bei dem als Material für die Elastomerschicht ein thermoplastisches Elastomer verwendet wird.

4. Verfahren nach Anspruch 1 oder 2, bei dem als Material für die Elastomerschicht ein Silikonwerkstoff verwendet wird.

5. Verfahren nach einem der Ansprüche 1 bis 4, bei dem in dem ersten Schritt ein Spritzgussprozess verwendet wird.

6. Verfahren nach einem der Ansprüche 1 bis 5, bei dem in dem zweiten Schritt ein Stangenanguss durchgeführt wird.

7. Verfahren nach einem der Ansprüche 1 bis 5, bei dem in dem zweiten Schritt ein Schirmanguss durchgeführt wird.

8. Verfahren nach einem der Ansprüche 1 bis 7, bei dem das hergestellte Kunststoffgehäuse mit einem Lenkgehäuse verbunden wird, um das Gehäuse eines Lenkgetriebes zu bilden.

9. Anordnung zum Herstellen eines Kunststoffgehäuses für ein Gehäuse eines Lenkgetriebes zur Durchführung eines Verfahrens nach einem der Ansprüche 1 bis 8, mit einer oberen Werkzeughälfte und einer unteren Werkzeughälfte und einem Angusskanal zum Aufbringen einer Schicht aus einem elastischen Material

10. Anordnung nach Anspruch 9, die für einen Stangenanguss ausgelegt ist.

11. Anordnung nach Anspruch 9, die für einen Schirmanguss ausgelegt ist.

## Claims

1. Method for producing a plastic housing for a housing of a steering gear, in which in a first step a main body and at least one closure element are produced and in a second step an elastomer layer, which connects the main body and the at least one closure element to one another, is applied by way of at least one gate point in a gating process.

2. Method according to Claim 1, in which the elastomer layer is applied in the second step by way of precisely one gate point.

3. Method according to Claim 1 or 2, in which a thermoplastic elastomer is used for the elastomer layer.

4. Method according to Claim 1 or 2, in which a silicone material is used as the material for the elastomer layer.

5. Method according to one of Claims 1 to 4, in which an injection-moulding process is used in the first step.

6. Method according to one of Claims 1 to 5, in which sprue gating is carried out in the second step.

7. Method according to one of Claims 1 to 5, in which diaphragm gating is carried out in the second step.

8. Method according to one of Claims 1 to 7, in which the plastic housing produced is connected to a steering housing to form the housing of a steering gear.

9. Arrangement for producing a plastic housing for a housing of a steering gear, for carrying out a method according to one of Claims 1 to 8, comprising an upper mould half and a lower mould half and a runner for applying a layer of an elastic material.

10. Arrangement according to Claim 9, which is designed for a sprue gate.

11. Arrangement according to Claim 9, which is designed for a diaphragm gate.

## Revendications

1. Procédé de fabrication d'un carter en matière plastique pour un carter d'un mécanisme de direction, dans lequel on fabrique dans une première étape un corps de base et au moins un élément de fermeture et on dépose dans une deuxième étape une couche d'élastomère via au moins un point de coulée dans un procédé de coulée, laquelle relie l'un à l'autre le corps de base et ledit au moins un élément de fermeture.

2. Procédé selon la revendication 1, dans lequel on dépose dans la deuxième étape la couche d'élastomère via exactement un point de coulée.

3. Procédé selon la revendication 1 ou 2, dans lequel on utilise un élastomère thermoplastique comme matériau pour la couche d'élastomère.

4. Procédé selon la revendication 1 ou 2, dans lequel on utilise un produit de silicone comme matériau pour la couche d'élastomère.

5. Procédé selon l'une quelconque des revendications 1 à 4, dans lequel on utilise dans la première étape un procédé de coulée par injection.

6. Procédé selon l'une quelconque des revendications 1 à 5, dans lequel on exécute dans la deuxième étape une injection directe.

7. Procédé selon l'une quelconque des revendications 1 à 5, dans lequel on exécute dans la deuxième étape une entrée en voûte.

8. Procédé selon l'une quelconque des revendications 1 à 7, dans lequel on assemble le carter en matière plastique fabriqué avec un carter de direction, afin de former le carter d'un mécanisme de direction.

9. Dispositif de fabrication d'un carter en matière plastique pour un carter d'un mécanisme de direction en vue de la mise en oeuvre d'un procédé selon l'une quelconque des revendications 1 à 8, avec une moitié d'outil supérieure et une moitié d'outil inférieure et un canal primaire pour appliquer une couche en un matériau élastique.

10. Dispositif selon la revendication 9, qui est conçu pour une injection directe.

11. Dispositif selon la revendication 9, qui est conçu pour une entrée en voûte.
